# EUROPEAN PATENT APPLICATION

(11) **EP 2 781 998 A1**
(43) Date of publication of application: **24.09.2014**
(21) Application number: 13160244.3
(22) Date of filing: 20.03.2013
(51) Int. Cl.: G06F 3/0482

(54) **A method and a system for generating a graphical user interface menu**

(71) Applicant: Advanced Digital Broadcast S.A., 1292 Geneva (CH)
(72) Inventor: Wielgosz, Marcin, 65-119 Zielona Gora (PL)
(74) Representative: Di Bernardo, Antonio

(57) **Abstract**

A system and a computer-implemented method for generating a graphical user interface menu comprising the steps of awaiting a first triggering event; displaying a menu, having at least two menu items, in response to the triggering event; focusing on a menu item of the menu; awaiting a second event; inserting a new menu item to the menu as a next menu item to the currently focused menu item, whereas the new menu item has an associated action that allows configuration of a filter of a filtered submenu; displaying the filtered submenu as a submenu of the focused menu item of the menu; allowing navigation to the submenu or the new menu item; selecting a menu item of interest.

## Description

### DESCRIPTION

The present invention relates to a computer-implemented graphical user interface configured to display a list of elements and a method and system for generating thereof.

One of the aims of designing a user-friendly graphical user interface is to provide attractive graphical effects, which are both aesthetically appealing and make the interface intuitive to use. A well-known problem is how to display a graphical user interface hierarchical menus. The items of such menus are typically text strings and/or graphical icons.

According to JAVA tutorial, available from Oracle, a menu provides a space-saving way to let the user choose one of several options. Other components with which the user can make a one-of-many choice include combo boxes, lists, radio buttons, spinners, and tool bars.

Menus are unique in that, by convention, they aren't placed with the other components in the UI. Instead, a menu usually appears either in a menu bar or as a popup menu. A menu bar contains one or more menus and has a customary, platform-dependent location - usually along the top of a window. A popup menu is a menu that is invisible until the user makes a platform-specific mouse action, such as pressing the right mouse button, over a popup-enabled component. The popup menu then appears under the cursor.

Patent publication US8266549 entitled apparatus and method for displaying hierarchical menu in mobile communication terminal, discloses an apparatus and method for displaying menu items of a hierarchical menu on a screen in such a manner that a function desired by a user can be traced and performed with a minimum number of key inputs. The top-level menu and bottom-level menu of the hierarchical menu can be simultaneously displayed in one screen picture, thereby enabling a user to reach from an upper-level menu to the bottom-level menu or from the bottom-level menu to the top-level menu with a minimum number of key inputs without passing through intermediate-level menus. Further, a certain menu can be displayed in one screen picture along with the one-level upper menu and one-level lower menu thereof or the one-level lower menu thereof so that the user can readily recognize the position of a current menu. Furthermore, the user can access all menus using only direction keys.

Another prior art publication US 2005/0108657 A1 entitled apparatus and method for displaying hierarchical menu in mobile communication terminal, discloses apparatus and method for displaying menu items of a hierarchical menu on a screen in such a manner that a function desired by a user can be traced and performed with a minimum number of key inputs. The top-level menu and bottom-level menu of the hierarchical menu can be simultaneously displayed in one screen picture, thereby enabling a user to reach from an upper-level menu to the bottom-level menu or from the bottom-level menu to the top-level menu with a minimum number of key inputs without passing through intermediate-level menus. Further, a certain menu can be displayed in one screen picture along with the one-level upper menu and one-level lower menu thereof or the one-level lower menu thereof so that the user can readily recognize the position of a current menu. Furthermore, the user can access all menus using only direction keys.

Prior art publication US5263174 entitled methods for quick selection of desired items from hierarchical computer menus, discloses a method of conveniently making a selection from a set of options available in a computer program. As successive letters which make up the proposed selection are entered, successively smaller lists of options corresponding to the entered letters are displayed. At any point, the user makes a selection by moving a cursor to a desired selection and pressing a button or key to indicate that the selection has been made.

Yet another publication US6661437 entitled hierarchical menu graphical user interface, discloses processing device, including an on-screen user interface display, which incorporates a means for generating a display of a plurality of hierarchically ordered menus. The menus include a current menu and a preceding parent menu showing a selection path from the parent menu to the current menu. Also a menu selection item within the hierarchical menu display provides a user at least one of, a) a display of control information for the device, and b) control parameter data entry capability. The processing device also incorporates a means for updating the on-screen display in response to user menu item selection. The processing device may also include a means for altering the device operation in response to an updated operating parameter value. Also, the selection path may indicate menu entry and exit points separated by at least one intervening menu item.

While the aforementioned graphical user interface hierarchical menus serve their purpose the applicant seeks an alternative solution that would improve usability and ability to configure graphical user interface hierarchical menus.

In order to improve the graphical user interface hierarchical menus, it would be desirable to provide a graphical user interface which could alter the way in which the menu items of interest is displayed. The aim of the present invention is to provide effective technical means to implement such graphical user interface hierarchical menus.

The object of the present invention is a computer-implemented method for generating a graphical user interface menu comprising the steps of awaiting a first triggering event; displaying a menu, having at least two menu items, in response to the triggering event; focusing on a menu item of the menu; awaiting a second event; inserting a new menu item to the menu as a next menu item to the currently focused menu item, whereas the new menu item has an associated action that allows configuration of a filter of a filtered submenu; displaying the filtered submenu as a submenu of the focused menu item of the menu; allowing navigation to the submenu or the new menu item; selecting a menu item of interest.

Preferably the navigation step is effected by means of a single action.

Preferably the single action is a one key press.

Preferably the second event is an expiry of a set time limit elapsed since the step of focusing on a menu item of the menu.

Preferably the filtered submenu comprises items filtered from media items available to the system.

The object of the present invention is also a computer software comprising program code means for performing all the steps of the computer-implemented method according to the present invention when said program is run on a computer.

The object of the present invention is also a non-volatile computer readable recording medium storing computer-executable instructions performing all the steps of the computer-implemented method according to the present invention when executed on a computer.

These and other objects of the invention presented herein are accomplished by providing a computer-implemented a method and a system for generating a graphical user interface menu. Further details and features of the invention, its nature and various advantages will become more apparent from the following detailed description of the preferred embodiments shown in a drawing, in which:
Figs. 1 shows an exemplary graphical user interface menu;
Fig. 2 shows the exemplary menu of Fig. 1 wherein an item of the menu has been selected;
Fig. 3 shows a second stage of presenting the menu from Fig. 2;
Fig. 4 shows a third stage of presenting the menu from Fig. 2;
Fig. 5 presents a fourth stage of presenting the menu from Fig. 2;
Fig. 6 depicts navigating among menu items;
Fig. 7 shows a method for displaying a graphical user interface menu; and
Fig. 8 depicts a system for displaying a graphical user interface menu.

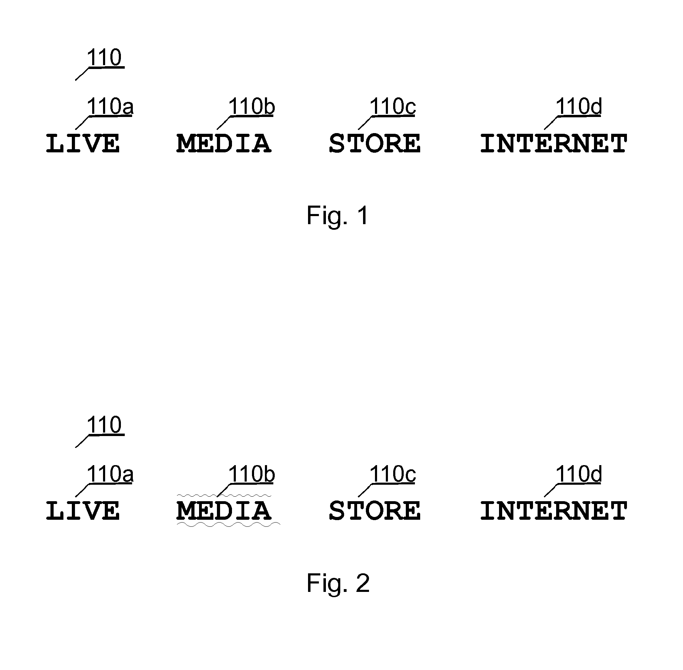

The graphical user interface menu, according to the invention, is shown in its exemplary initial view in Fig. 1. In this view the menu 110 comprises four items 110a to 110d, whereas the number of menu items is not a limiting feature by any means. Such view as presented is considered a top level hierarchy of the menu 110. Each of the menu items 110a to 110d may comprise a submenu

(not shown). In this exemplary view the menu is displayed horizontally, but a skilled person is aware that a graphical user interface menu may be displayed on any different axis or direction other than the horizontal axis, such as vertical axis or 45 degree oriented axis.

The four menu items 110a to 110d are preferably navigable by means of selection of a left or right direction key on a controller such as a keyboard, a pad or a remote control unit.

Fig. 2 shows the exemplary menu of Fig. 1 wherein an item of the menu has been selected. The item 110b MEDIA has been selected by means of a controller, which means that a user is interested in accessing this particular menu item.

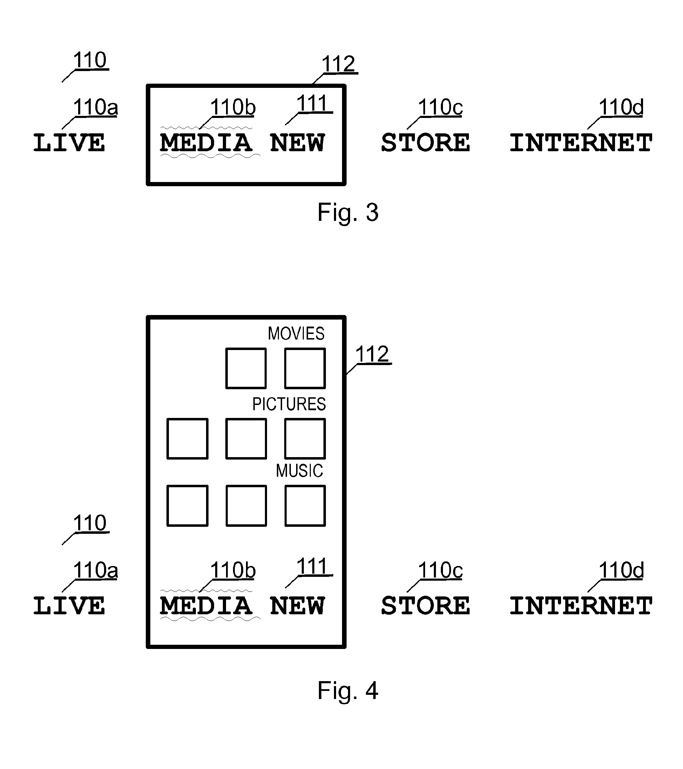

Fig. 3 shows a second stage of presenting the menu from Fig. 2. At this stage after a predefined event has occurred a new menu item is added to the menu while the selected menu item remain the same i.e. item 110b MEDIA. The new menu item 111 is inserted in the menu so that it is accessible by means of the controller's single action such as a keypress. In case of the present example the new menu item 111 is inserted to the right of the selected menu item 110b MEDIA. Additionally there may be displayed some grouping graphical element 112 so that the user is aware that the new menu item 111 is associated with the selected menu item 110b MEDIA.

The predefined event is preferably an expiry of a set time limit elapsed since the menu item 110b MEDIA has been selected.

The added menu item 111 is named NEW since it represents access to a filtered submenu. The filtered submenu comprises items filtered from media items available to the system.

The filtering takes place according to user set criteria. For example a filter named NEW will output all media that are new since the user displayed the list last time or new since beginning of the week/month etc. The exact method for determining whether an item is new, may be configured by the user of the system, hence the menu will display for example new video on demand items, new audio items or new pictures. It is evident that, preferably, the name of the new menu item shall correspond to the function of the applied filtering.

Fig. 4 shows a third stage of presenting the menu from Fig. 2. In this figure the area 112 has an expanded view wherein items of each filtered category are listed in graphical, horizontally arranged lists. In this submenu there are three filtered lists, namely Movies, Pictures and Music.

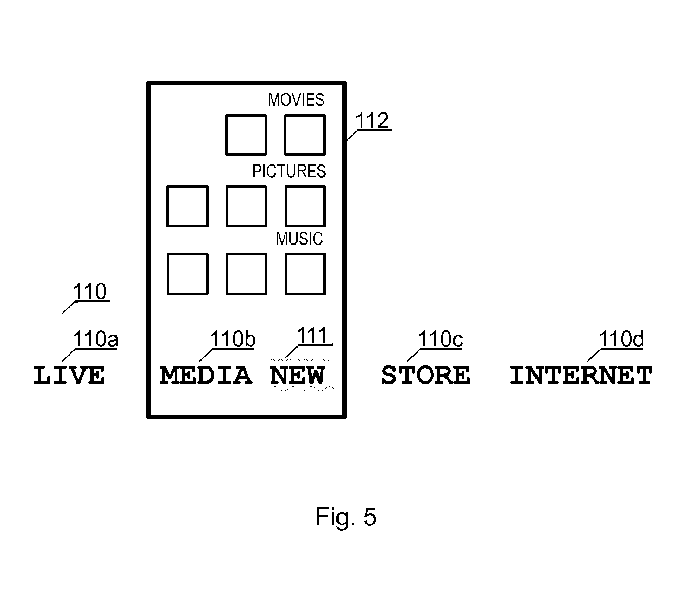

Fig. 5 presents a fourth stage of presenting the menu from Fig. 2. In this arrangement a user may navigate to the menu item 111 in order to access it and define a new filter for selection of items presented in Fig. 4. The filter may be as simple as setting a threshold date and a name of the menu item. Other filtering arrangements may be applied such as selecting particular titles, sources of content, genre of content and the like.

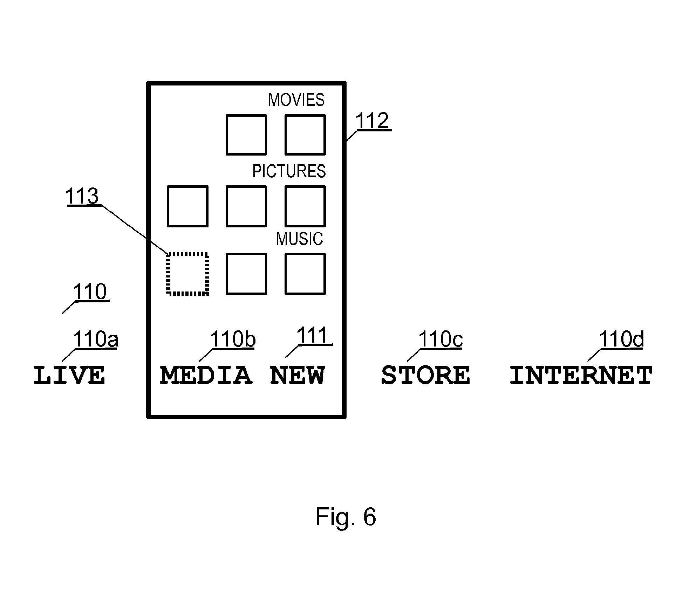

Fig. 6 depicts navigating among menu items. When focus is on the menu item 110b MEDIA or 111 NEW, a user may navigate with a use of a controller, to the filtered media items. For example the user may press 'up' key in order to select menu item 113. From this moment on the user is allowed to navigate using directional keys as in cells of a table. The user may also exit the menu or select an item and be directed to a different section of the graphical user interface such as pictures browser application section.

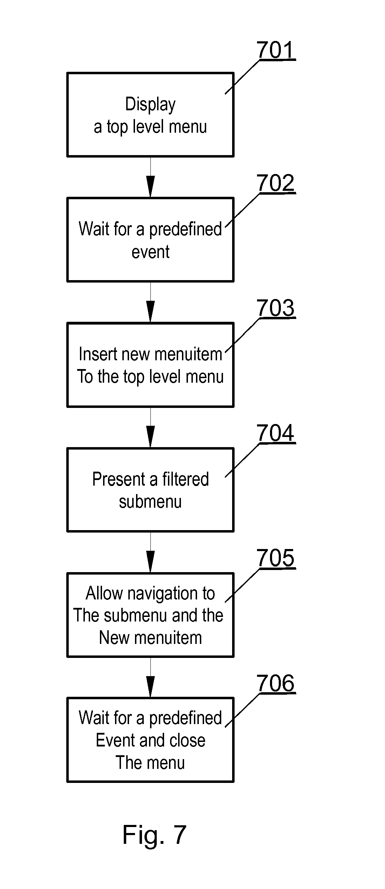

Fig. 7 shows a method for displaying a graphical user interface menu. The process starts at step 701 from displaying a top level menu preferably in response to user action such as pressing a menu button. A menu of Fig. 1 is displayed and in particular a signal is generated that provides video data with the menu. At this stage a user navigates among menu item, which results in change of a focused menu item.

Subsequently the procedure advances to step 702 where the system waits for a predefined event. As previously described, the event is preferably time elapsed since the execution of step 701. The timer may be set to for example 5 seconds. Next, the process moves to step 703 where the system executes an operation of inserting a new menu item to the top level graphical user interface menu as shown with reference to Fig. 3. The new menu item has an associated action that allows configuration of a filter of a filtered submenu. Preferably the configuration includes setting a name for the new menu item in addition to filtering parameters.

Then the procedure advances to step 704, where it is configured to present a filtered submenu such as the one shown previously with reference to Fig. 4. After that, at step 705, there is allowed navigation to the submenu and/or the new menu item. This is where a user may select an item of interest. Finally, at step 706, the procedure waits for a predefined event and closes the menu. Such event may be a selection of a particular menu item such as a picture from the list 113.

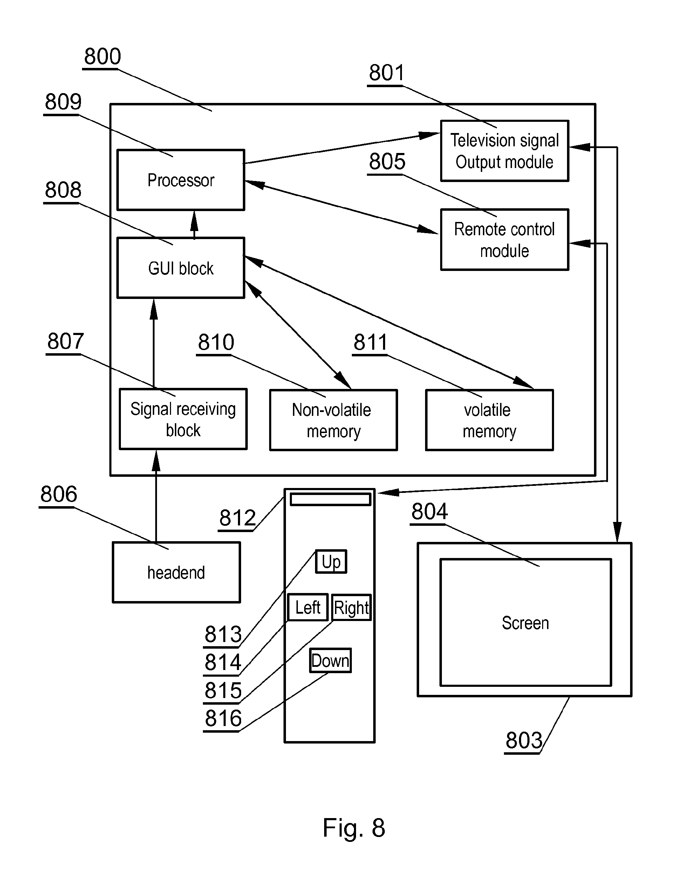

Fig. 8 depicts a block diagram of a set-top box system 800 according to an embodiment of the invention. In one configuration, the set-top box system 800 includes a television signal output module connected 801 to a display device 803 having a display screen 804. Typically, connection with an external display device is effected by means of a SCART connection or a HDMI connection.

The set-top box (STB) 800, is controlled with a remote control unit 812 (RCU) connected to a remote control module 805. The remote control 812 is typically connected to the remote control module 805 by means of a wireless infrared connection (or other RF connection), which in certain embodiments may be either unidirectional or bidirectional.

In addition, the remote control 812 may include a number of functional buttons or other similar controls. Typically, a set of directional buttons is present on a remote control 812, namely an "Up" button 813, a "Down" button 816, a "Left" button 814, a "Right" button 815.

The STB 800, is an intermediate device between a headend 806 (for example IPTV, Terrestrial, Satellite or Cable) and a display device 803, which may also be built-in device in the STB 800. Alternatively small-sized STBs 800 may be integrated into large TV displays.

The headend 806, transmits to the STB 800, signals comprising various data such as television or radio data. The data are received by means of a signal reception block 807, which in a typical embodiment will comprise a demultiplexer, descrambler and a decoder. The STB 800, receives data and processes the same for display on the display screen 803. The STB 800, may also include hardware and software for presenting a graphical user interface (GUI) 808 on the display screen 803 for operating the various functions and services provided by the STB 800.

The processor 809 cooperates with the GUI block 808 in order to generate and present GUI by means of the television signal output module 801. The GUI block may implement the method as presented with reference to Fig. 1 to Fig. 7.

The processor 809, is bidirectionally connected to various types of memories such as non-volatile memory 809 (eg. Flash, HDD) and volatile memory 810 (eg. RAM). The software for presenting a graphical user interface (GUI) is stored in these memories as computer executable instructions that are to be processed by the processor 809. Further, the memories store graphical data related to the graphical user interface.

As explained, the STB 800, typically provides access to a plurality of selectable options by means of a GUI. The typical options are channels, programs, applications, digital media files, web pages, e-mail programs, chat clients, personal video recorder (PVR) applications, and the like. Furthermore, modern STBs 800, typically store or provide access to stored digital recordings, photographs, audio files, video streaming, interactive games or other forms of digital media.

It can be easily recognized, by one skilled in the art, that the aforementioned method for generating the graphical user interface menu may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for generating a graphical user interface menu comprising the steps of:
• awaiting a first triggering event;
• displaying a menu, having at least two menu items, in response to the triggering event;
• focusing on a menu item of the menu;
• awaiting a second event;
the method being **characterized in that** it further comprises the steps of
• inserting a new menu item to the menu as a next menu item to the currently focused menu item, whereas the new menu item has an associated action that allows configuration of a filter of a filtered submenu;
• displaying the filtered submenu as a submenu of the focused menu item of the menu;
• allowing navigation to the submenu or the new menu item;
• selecting a menu item of interest.

2. The method according to claim 1, **characterized in that** the navigation step is effected by means of a single action.

3. The method according to claim 2, **characterized in that** the single action is a one key press.

4. The method according to claim 1, **characterized in that** the second event is an expiry of a set time limit elapsed since the step of focusing on a menu item of the menu.

5. The method according to claim 1, wherein the filtered submenu comprises items filtered from media items available to the system.

6. A computer program comprising program code means for performing all the steps of the computer-implemented method according to any of claims 1-5 when said program is run on a computer.

7. A non-volatile computer readable medium storing computer-executable instructions performing all the steps of the computer-implemented method according to any of claims 1-5 when executed on a computer.
